# EUROPÄISCHE PATENTSCHRIFT

(11) **EP 1 248 095 B1**
(45) Veröffentlichungstag und Bekanntmachung des Hinweises auf die Patenterteilung: **02.11.2011**
(21) Anmeldenummer: 02006597.5
(22) Anmeldetag: 22.03.2002
(51) Int. Cl.: G01N 3/08, G06F 15/18, G06F 17/17

(54) **Verfahren zur Ermittlung von Spannungs-Dehnungs-Kurven mittels Splineinterpolation auf Basis charakterischer Punkte und unter dem Einsatz neuronaler Netze**
Method for the determination of strain-stress relations by means of spline interpolation on the basis of characteristic points and by employing neural networks
Procédé pour la détermination de la relation contrainte-allongement sur la base de points caractéristiques et l'utilisation de réseaux neuronaux

(30) Priorität: 04.04.2001 DE 10116773
(43) Veröffentlichungstag der Anmeldung: 09.10.2002
(73) Patentinhaber: Underwriters Laboratories Inc, Northbrook, IL 60062-2096 (US)
(72) Erfinder: Loosen, Roland, Dr., 50374 Erfstadt (DE); Mrziglod, Thomas, Dr., 51467 Bergisch Gladbach (DE); Wanders, Martin, Dr., 51063 Köln (DE); Salewski, Klaus, 47802 Krefeld (DE); Sarabi, Bahman, Dr., 47803 Krefeld (DE)
(74) Vertreter: Seemann, Ralph

(56) Entgegenhaltungen:
- DE-C- 19 601 858
- MILLAR D ET AL: "Investigation of back-propagation artificial neural networks in modelling the stress-strain behaviour of sandstone rock" NEURAL NETWORKS, 1994. IEEE WORLD CONGRESS ON COMPUTATIONAL INTELLIGENCE, 1994 IEEE INTERNATIONAL CONFERENCE ON ORLANDO, FL, USA 27 JUNE-2 JULY 1994, NEW YORK, NY, USA, IEEE, 27. Juni 1994 (1994-06-27), Seiten 3326-3331, XP010127708 ISBN: 0-7803-1901-X
- MUKHERJEE A ET AL: "Artificial neural networks in prediction of mechanical behavior of concrete at high temperature" NUCLEAR ENGINEERING AND DESIGN, Bd. 178, 1997, Seiten 1-11, XP002206975
- PERNOT S ET AL: "Application of neural networks to the modelling of some constitutive laws" NEURAL NETWORKS, ELSEVIER SCIENCE PUBLISHERS, BARKING, GB, Bd. 12, Nr. 2, März 1999 (1999-03), Seiten 371-392, XP004157571 ISSN: 0893-6080
- WU X ET AL: "Representation of material behavior: neural network-based models" INTERNATIONAL JOINT CONFERENCE ON NEURAL NETWORKS (IJCNN). SAN DIEGO, JUNE 17 - 21, 1990, NEW YORK, IEEE, US, Bd. 1, 17. Juni 1990 (1990-06-17), Seiten 229-234, XP000144219
- GHABOUSSI J ET AL: "Knowledge-based modeling of material behavior with neural networks" JOURNAL OF ENGINEERING MECHANICS, Bd. 117, Nr. 1, Januar 1991 (1991-01), Seiten 132-153, XP001088946
- MILLIGAN R VINCENT: "COMPUTER ANALYSIS OF MECHANICAL TEST DATA USING CUBIC SPLINES" ISA TRANS 1978, Bd. 17, Nr. 2, 1978, Seiten 21-30, XP001119082
- CHEN HYLAND Y L ET AL: "NONLINEAR VISCOELASTICITY OF " HARD ELASTIC " POLYPROPYLENE FIBERS" SPE TECH CONF, 33RD ANNU, PROC; ATLANTA, GA MAY 5-8 1975, 1975, Seiten 265-267, XP001119088 1975 SPE, Greenwich, Conn
- YOUNG JOEL J: "Technique for determining yield point elongation" SYMPOSIUM ON AUTOMATION OF MECHANICAL TESTING; PITTSBURGH, PA, USA MAY 21 1992, Nr. 1208, 21. Mai 1992 (1992-05-21), Seiten 75-90, XP001119087 ASTM Spec Tech Publ;ASTM Special Technical Publication 1993 Publ by ASTM, Philadelphia, PA, USA

## Beschreibung

Die Erfindung betrifft ein Verfahren zur Ermittlung einer Spannungs-Dehnungs-Kurve.

Aus dem Stand der Technik ist bekannt, dass zur Bestimmung der mechanischen Eigenschaften eines Materials Zugversuche durchzuführen sind, bei denen Spannungs-Dehnungs-Kurven gemessen werden. Insbesondere für Kunststoffe ist die Ermittlung der Beanspruchungsgrenzen des Materials mittels Spannungs-Dehnungs-Kurven von Bedeutung. Spannungs-Dehnungs-Kurven bilden eine wichtige Basis für die Konstruktion von Kunststoffteilen.

Der Ablauf von Zugversuchen für Kunststoffe ist in der internationalen Norm ISO 527 bzw. in der Euronorm DIN EN 20527 definiert. Bei einem solchen Zugversuch wird ein Probekörper hinsichtlich seines Zugformungsverhaltens, seiner Festigkeit, seines Zugmoduls und anderen Kennzeichen der Zugspannungs-Dehnungsbeziehung untersucht. Für einen Zugversuch werden bevorzugt Vielzweckprobekörper nach DIN EN 23167 verwendet.

Wichtige Parameter für den Zugversuch sind die Messlänge und die Prüfgeschwindigkeit. Die typischen mechanischen Kennwerte sind die Streckspannung, die Bruchspannung, die Zugfestigkeit, die Spannung bei einer bestimmten Dehnung, die Streckdehnung, die Bruchdehnung, die Dehnung bei der Zugfestigkeit, die nominelle Bruchdehnung, die nominelle Dehnung bei der Zugfestigkeit und das Zugmodul.

Während eines Zugversuchs wird eine komplette Spannungs-Dehnungs-Kurve aufgezeichnet, in der die Spannung in Abhängigkeit von den sich einstellenden Dehnungen des Probekörpers dargestellt wird. Bei Spannungs-Dehnungs-Kurven von Zugversuchen an Kunststoffen können beispielsweise drei typische Kurventypen unterschieden werden.

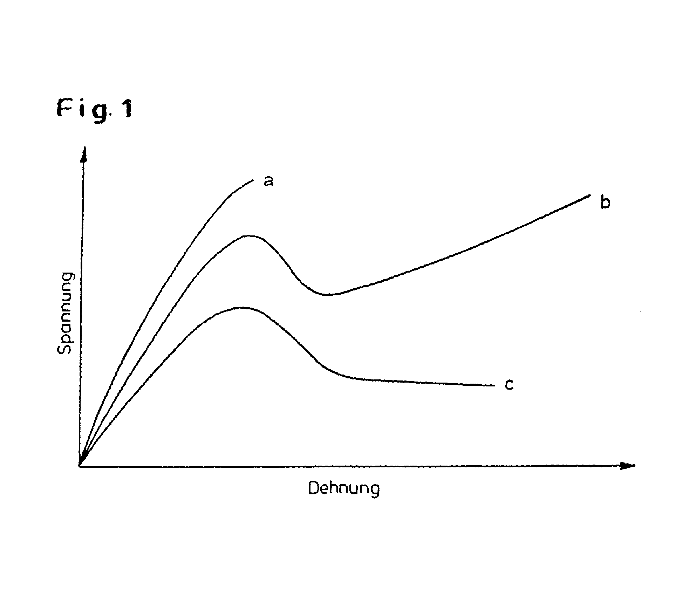

Die Fig. 1 zeigt jeweils exemplarisch einen solchen typisierten Kurvenverlauf. Die Kurve a tritt bei zähen oder spröden Materialien ohne Streckpunkt auf, wobei sie bei zähen Materialien relativ flach verläuft, während sie bei spröden Materialien steil ansteigt. Die Kurve b tritt bei zähen Materialen mit Streckpunkt auf. Zugfestigkeit und Bruchspannung sind dabei größer als die Streckspannung. Die Kurve c tritt ebenfalls bei zähen Materialien mit Streckpunkt auf. Die Zugfestigkeit liegt im Streckpunkt und ist größer als die Bruchspannung.

Nachteilig bei der Bestimmung von mechanischen Materialeigenschaften aufgrund der Messung von Spannungs-Dehnungs-Kurven ist, dass die Ermittlung solcher Spannungs-Dehnungs-Kurven eine Vielzahl unterschiedlicher Zugversuche bei unterschiedlicher Parameterwahl erforderlich macht und damit sehr zeit- und kostenintensiv ist. Aufgrund der Vielzahl der in der Praxis zu variierenden Parameter kann nur ein kleiner Teil der möglichen Variationsmöglichkeiten durch Spannungs- Dehnungs-Zugversuche abgedeckt werden.

Im Dokument von D. Millar et al., "Investigation of Back-Propagation Artificial Neural Networks in Modelling the Stress-Strain Behaviour of Sandstone Rock", Neural Networks, 1994, IEEE World Congress on Computational Intelligence., 1994 IEEE International Conference on Orlando, FL, USA 27 June - 2 July 1994, New York, NY, USA, IEEE, Seiten 3326 - 3331, sind Untersuchungen von Back-Propagation neuronalen Netzwerken für die Modellierung des Spannungs-Dehnungs-Verhaltens von Sandsteinfelsen offenbart. Hierbei wird das Spannungs-Dehnungs-Verhalten durch Variation des Einschlussdruckes untersucht. Hierbei werden die Dehnung und der Einschlussdruck als Eingangsgröße für ein neuronales Netzwerk verwendet. Als Ausgangsgröße wird die Spannung im Sandsteinfelsen erhalten.

Ferner sind im Dokument von A. Mukherjee et al., "Artificial neural networks in prediction of mechanical behavior of concrete at high temperature", Nuclear Engineering and Design 178 (1997), Seiten 1-11, neuronale Netze für die Vorhersage der mechanischen Eigenschaften von Beton bei hohen Temperaturen beschrieben. Hierbei werden für drei verschiedene experimentelle Bedingungen neuronale Netzwerke erstellt. Als experimentelle Bedingungen werden eine variable Belastung bei konstanter Temperatur, eine konstante Belastung bei variabler Temperatur und die Einspannung eines Bauteils bei variabler Temperatur untersucht.

Außerdem offenbart das Dokument von S. Pemot et al., "Application of neural networks to the modelling of some constitutive laws", Neural Networks 12 (1999), Seiten 371 - 392, Anwendungen von neuronalen Netzen in Modellen auf Basis von experimentellen Ergebnissen, um ein Verfahren zur Klassifikation von Stoffgesetzen von Materialien bereitzustellen.

Der Erfindung liegt die Aufgabe zugrunde, Spannungs- und Dehnungskurven genau und zuverlässig unter Angabe von Anforderungen an ein zu konstruierendes Bauteil genau zu prognostizieren.

Die der Erfindung zugrunde liegende Aufgabe wird mit den Merkmalen des unabhängigen Anspruchs 1 gelöst. Bevorzugte Ausführungsformen sind in den abhängigen Ansprüchen angegeben.

Die Erfindung erlaubt es mit einer relativ begrenzten Anzahl von Spannungs- Dehnungs-Zugversuchen mehrere neuronale Netze zu trainieren. Die neuronalen Netze dienen dann zur Ermittlung beliebiger Spannungs-Dehnungs-Kurven bei Variationen der Parameter, ohne dass weitere Zugversuche tatsächlich durchzuführen sind.

Ein neuronales Netz ist im Wesentlichen durch drei Elemente charakterisiert:
1. Die Rechenoperation in einem Neuron, in dem die skalierten Eingabewerte mit Gewichtsfaktoren zum Ausgabesignal umgesetzt werden. Innerhalb einer jeden Verarbeitungseinheit wird ein Skalarprodukt der gewichteten Eingangswerte gebildet. Auf diesen Ergebniswert wird eine sogenannte Aktivierungsfunktion angewendet und der entsprechende Wert weitergeleitet.
2. Die Neuronennetz- Architektur, dass heißt die Art der Verknüpfung der Neuronen bzw. der Neuronenschichten.
3. Das Lernverfahren, bei dem die willkürlich gewählten Gewichtsfaktoren so angepasst werden, dass die richtige Antwort erhalten wird. Das Lernverfahren erfolgt in einer Folge von Iterationsschritten, in denen die Abweichungen zwischen den errechneten und den vorgegebenen Eigenschaftswerten minimiert werden. Das neuronale Netz erhält danach die Kenntnis aller funktionalen Abhängigkeiten in der Lernmenge.

Neuronale Netze bestehen meist aus zwei oder mehr Schichten von Neuronen, die im Allgemeinen durch entsprechende Computerprogramme simuliert oder durch spezielle Computerchips in Hardware-Form repräsentiert werden. Sie zeichnen sich dadurch aus, dass ein Eingangssignal, welches aus einer unterschiedlichen Aktivität der Neuronen der ersten Ebene besteht, die Aktivität der Neuronen der zweiten Ebene beeinflusst.

Die Art der Beeinflussung ist zunächst nicht genau festgelegt, sondern bildet sich im Verlauf von Lernvorgängen allmählich heraus. Beispielsweise ist aus der DE 198 41 820 A1 ein neuronales Netz auf der Grundlage fraktaler Abbildungsfunktionen bekannt.

Nach einer bevorzugten Ausführungsform der Erfindung wird bei der Erstellung des neuronalen Netzes zunächst eine Anzahl charakteristischer Punkte aus den gemessenen Spannungs- Dehnungs-Kurvenverläufen ermittelt. Die charakteristischen Punkte werden dann einer Transformation, vorzugsweise einer Faktorenanalyse oder einer Hauptkomponenten-Transformation unterzogen. Das neuronale Netz wird dann mittels der so transformierten charakteristischen Punkte trainiert. Das mit den transformierten Punkten trainierte neuronale Netz weist im Vergleich zu einem mit nicht transformierten Punkten trainiertes Netz ein stabileres Verhalten auf.

Nach einer weiteren bevorzugten Ausführungsform wird für jeden Spannungs-Dehnungs-Kurven-Typ ein gesondertes neuronales Netz trainiert. Ferner wird ein neuronales Netz zur Bestimmung des Typs einer Spannungs-Dehnungs-Kurve basierend auf Eingangsparametern trainiert; ggf. kann auch hier eine Hauptkomponententransformation der Typwahrscheinlichkeiten zum Einsatz kommen. Dieses neuronale Netz erlaubt es dann, eines der gesonderten neuronalen Netze entsprechend dem jeweils aktuellen Typ auszuwählen.

Die Erfindung wird im weiteren anhand eines bevorzugten Ausführungsbeispiels näher beschrieben. Es zeigen
- Fig. 1: eine aus dem Stand der Technik bekannte Typisierung von Spannungs-Dehnungs-Kurven,
- Fig. 2: ein Flussdiagramm einer Ausführungsform des erfindungsgemäßen Verfahrens zur Erstellung eines neuronalen Netzes,
- Fig. 3: eine Darstellung der Schrittfolge, um aus einer Spannungs-Dehnungs-Kurve die Hauptkomponenten der charakteristischen Punkte zu ermitteln,
- Fig. 4: ein Blockdiagramm zum Trainieren der neuronalen Netze,
- Fig. 5: ein Blockdiagramm eines neuronalen Netzes zur Bestimmung einer Spannungs-Dehnungs-Kurve aufgrund von Eingabeparametern,
- Fig. 6: eine Darstellung der Auswahl der charakteristischen Punkte aus einer Spannungs- Dehnungs-Kurve,
- Fig. 7: eine Darstellung der Randbedingungen für die Generierung von Spannungs-Dehnungs-Kurven aus charakteristischen Punkten,
- Fig. 8: eine Darstellung der Stabilisierung der Splineinterpolation mittels einer logarithmischen Skalierung auf einem Teilintervall.

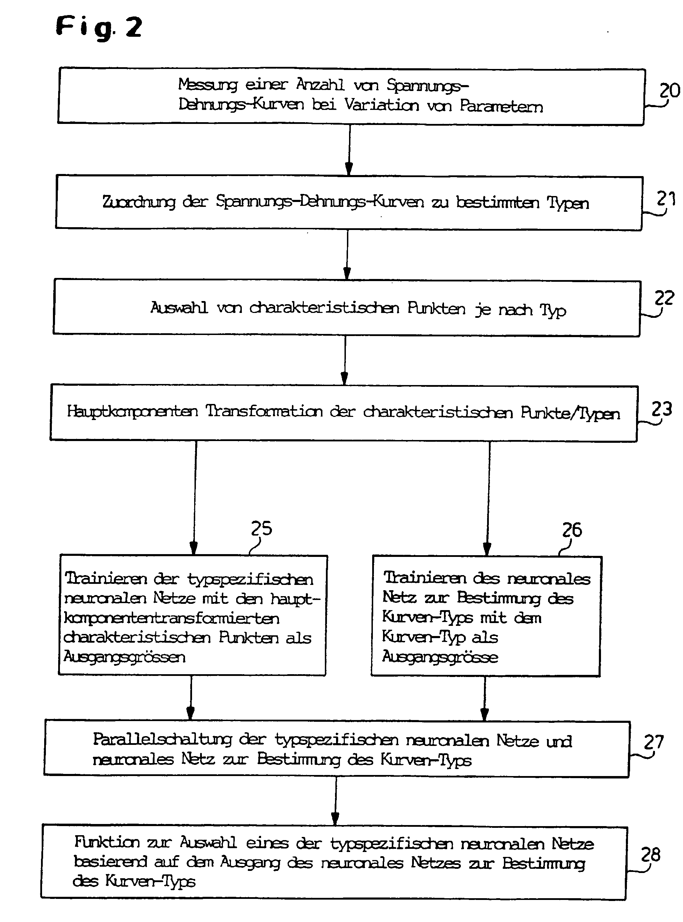

Die Fig. 2 zeigt ein Flussdiagramm zur Erzeugung neuronaler Netze für die Ermittlung von Spannungs-Dehnungs-Kurven. In Schritt 20 erfolgt zunächst die Durchführung von Zugversuchen zur Ermittlung von Spannungs-Dehnungs-Kurven bei Variationen verschiedener Parameter. Beispielsweise kann die Rezeptur, dass heißt die Materialzusammensetzung variiert werden, wie auch die Farbe und die Bauteilgeometrie.

Ferner können die Verarbeitungsbedingungen bei der Herstellung des Prüfkörpers variiert werden. Bei einem Kunststoffspritzgießteil sind dies etwa die Massetemperatur, die Werkzeugtemperatur und der Nachdruck. Ferner können auch die Bedingungen, unter denen der Zugversuch durchgeführt wird, variiert werden, wie etwa die Temperatur, welcher der Prüfkörper bei der Durchführung des Zugversuches ausgesetzt ist.

Die in einer solchen Messreihe ermittelten Spannungs-Dehnungs-Kurven werden in dem Schritt 21 jeweils einem bestimmten Typ zugeordnet. Dabei kann beispielsweise die Typisierung gemäß der Fig. 1 zur Anwendung kommen.

In dem Schritt 22 wird für die typisierten Spannungs-Dehnungs-Kurven jeweils eine Anzahl von charakteristischen Punkten ausgewählt. Die Anzahl und die Lage der charakteristischen Punkte kann je nach Typ unterschiedlich sein. Beispielsweise kann bei einer Spannungs-Dehnungs-Kurve des Kurventyps a (vgl. Fig. 1) ein einzelner oder wenige charakteristische Punkte ausreichend sein, da die Kurve im Wesentlichen im linearen Bereich verläuft.

Bei einer Spannungs-Dehnungs-Kurve des Typs b werden zumindest drei charakteristische Punkte zur Erfassung des Kurvenverlaufs notwendig sein, nämlich der Streckpunkt, der Reißpunkt und das zwischen dem Streckpunkt dem Reißpunkt liegende Minimum der Spannungs-Dehnungs-Kurve. Entsprechende charakteristische Punkte können auch für eine Kurve des Typs c und für weitere Kurventypen definiert werden.

In dem Schritt 23 werden die charakteristischen Punkte der Spannungs-Dehnungs-Kurven einer Hauptkomponententransformation unterzogen. Durch die Hauptkomponententransformation wird sowohl das Rauschen als auch Redundanz verringert, indem eine Projektion auf einen relevanten Unterraum in einem mehrdimensionalem Koordinatenraum vorgenommen wird. Die Hauptkomponententransformation ist ein als solches bekanntes mathematisches Verfahren.

Eine entsprechende Hauptkomponententransformation kann auch hinsichtlich des Kurventyps durchgeführt werden.

Vor der Durchführung der jeweiligen Hauptkomponententransformation muss zunächst die Transformationsvorschrift ermittelt werden. Dies erfolgt durch Anordnung der zuvor ermittelten charakteristischen Punkte von Kurven desselben Kurventyps in einer Matrix und Bestimmung der Parameter der Hauptkomponententransformation, um die Matrix auf ihre Hauptkomponentenform zu bringen. Entsprechend kann auch hinsichtlich der Transformationsvorschrift für die Hauptkomponententransformation hinsichtlich des Kurventyps vorgegangen werden.

In dem Schritt 25 werden die in dem Schritt 20 variierten Parameter in verschieden parallelgeschaltete neuronale Netze eingegeben. Jedes der parallel geschalteten neuronalen Netze ist dabei einem bestimmten Kurventyp zugeordnet.

Erfolgt die Eingabe der Parameter für einen Zugversuch bei dem eine Spannungs-Dehnungs-Kurve eines bestimmten Typs ermittelt wurde, so wird der Ausgang des diesem Kurventyp entsprechend neuronalen Netzes ausgewertet. Die von dem neuronalen Netz des betreffenden Typs ausgegebenen Werte werden mit den hauptkomponententransformierten charakteristischen Punkten, die in dem Schritt 23 für den betrachteten Zugversuch ermittelt worden sind, verglichen. Aufgrund einer Differenz zwischen den von dem neuronalen Netz ausgegebenen Werten und den tatsächlichen durch die Hauptkomponententransformation in dem Schritt 23 ermittelten Werten erfolgt eine Rückkopplung in das neuronale Netz, um die Gewichtung der Neuronen entsprechend der Wertdifferenz anzupassen.

Durch die sequentielle Eingabe der verschiedenen Parameter und durch den jeweils stattfindenden Abgleich der berechneten mit den durch Messung und Hauptkomponententransformation erhaltenen Werte erfolgt dann schrittweise das Training der neuronalen Netze der verschiedenen Typen.

Ferner wird in dem Schritt 26 auch ein neuronales Netz zur Bestimmung des Kurventyps aus den Parametern trainiert. Hierzu werden die entsprechenden Parameter in ein neuronales Netz eingegeben, dessen Ausgang die Wahrscheinlichkeiten für das Vorliegen eines bestimmten Kurventyps anzeigen soll. Der Ausgang dieses neuronalen Netzes wird jeweils mittels des tatsächlich vorliegenden Kurventyps bzw. mit der Hauptkomponententransformation des tatsächlich vorliegenden Kurventyps abgeglichen und die Gewichtung der Neuronen entsprechend angepasst. Auch dieses neuronale Netz zur Bestimmung des Kurventyps wird durch das Anlegen der verschiedenen Parameter und dem nachfolgenden Abgleich mit dem tatsächlichen Kurventyp schrittweise trainiert.

Das Trainieren der typspezifischen neuronalen Netze mit den hauptkomponententransformierten charakteristischen Punkten als Ausgangsgrößen erfolgt für alle Spannungs-Dehnungs-Kurven der in dem Schritt 20 durchgeführten Messreihe. Die Schritte 25 und 26 können parallel ablaufen, da der Eingabevektor, also eine bestimmte Menge von Parametern pro Spannungs- Dehnungs-Kurve, für die verschiedenen neuronalen Netze jeweils gleich sein können.

In dem Schritt 27 werden die typspezifischen neuronalen Netze sowie das neuronale Netz zur Bestimmung des Kurventyps, die in den Schritten 25 bzw. 26 ermittelt worden sind, parallel geschaltet. In dem Schritt 28 wird eine Funktion zur Auswahl eines der typspezifischen neuronalen Netze generiert.

Die Funktion erhält den Ausgang des neuronalen Netzes zur Bestimmung des Kurventyps, dass heißt die jeweiligen Wahrscheinlichkeiten für das Vorliegen eines bestimmten Kurventyps. Die Funktion ermittelt das Maximum aus den verschiedenen Typwahrscheinlichkeiten und wählt das jenige neuronale Netz aus, welches dem wahrscheinlichsten Kurventyp entspricht. Dadurch kann beim Betrieb des so zusammengeschalteten neuronalen Gesamt-Netzes basierend auf den Eingabeparametern zunächst der Kurventyp bestimmt werden, um das entsprechende typspezifische neuronale Netz auszuwählen.

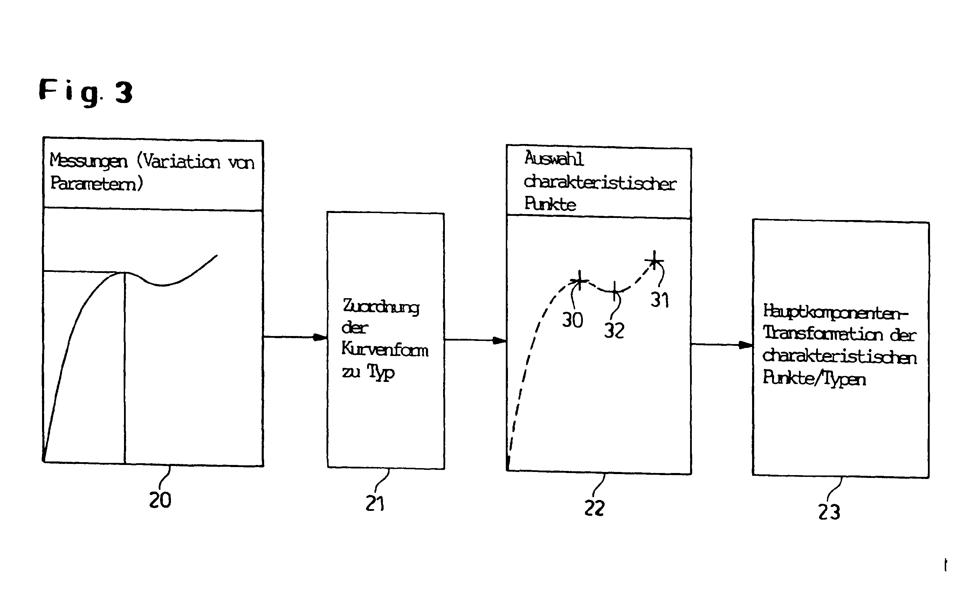

Die Fig. 3 veranschaulicht die Ermittlung der hauptkomponententransformierten charakteristischen Punkte aus einer gemessenen Spannungs- Dehnungs-Kurve. Die Schritte der Fig. 3, die Schritten der Fig. 2 entsprechen, wurden dabei mit dem selben Bezugszeichen bezeichnet. In dem Schritt 20 wird zunächst eine Spannungs-Dehnungs-Kurve bei Vorliegen bestimmter Parameter, dass heißt bei einer bestimmten Materialzusammensetzung, Farbe des Materials, Geometrie des Probekörpers, Verarbeitungsparameter beim Kunststoffspritzgießvorgang sowie einer bestimmten Temperatur, Prüfgeschwindigkeit und/oder weitere Parameter bei der Durchführung des Zugversuchs, gemessen. Solche Messungen werden wiederholt für verschiedene Variationen der Parameter, dass heißt für unterschiedliche Materialzusammensetzungen, Farben, Bauteilgeometrien usw. durchgeführt.

In dem Schritt 21 erfolgt eine Zuordnung der gemessenen Kurvenform zu einem bestimmten Typ. In dem Schritt 22 erfolgt sodann die Auswahl charakteristischer Punkte, je nach Kurventyp. In dem Beispiel der Fig. 3 handelt es sich bei der Spannungs-Dehnungs-Kurve um eine Kurve des Typs b (vgl. Fig. 1), so dass entsprechend zumindest der Streckpunkt 30, der Reißpunkt 31 und der zwischen dem Streckpunkt 30 und dem Reißpunkt 31 liegenden Punkt 32 ausgewählt werden. Zwischen diesen Punkten können automatisch weitere Messpunkte beispielweise in äquidistanten Dehnungsabständen als charakteristische Punkte ausgewählt werden.

In dem Schritt 23 werden die so aus allen gemessenen Spannungs-Dehnungs-Kurven des gleichen Typs erhaltenen charakteristischen Punkte einer Hauptkomponententransformation unterzogen, um zunächst die Parameter für die Durchführung der Hauptkomponententransformation zu ermitteln. Die so ermittelte Berechnungsvorschrift wird dann zur Hauptkomponententransformation der charakteristischen Werte der einzelnen Kurven verwendet. Entsprechend können auch für das neuronale Netz zur Bestimmung der Typ-Wahrscheinlichkeit die hauptkomponententransformierten Typen ermittelt werden.

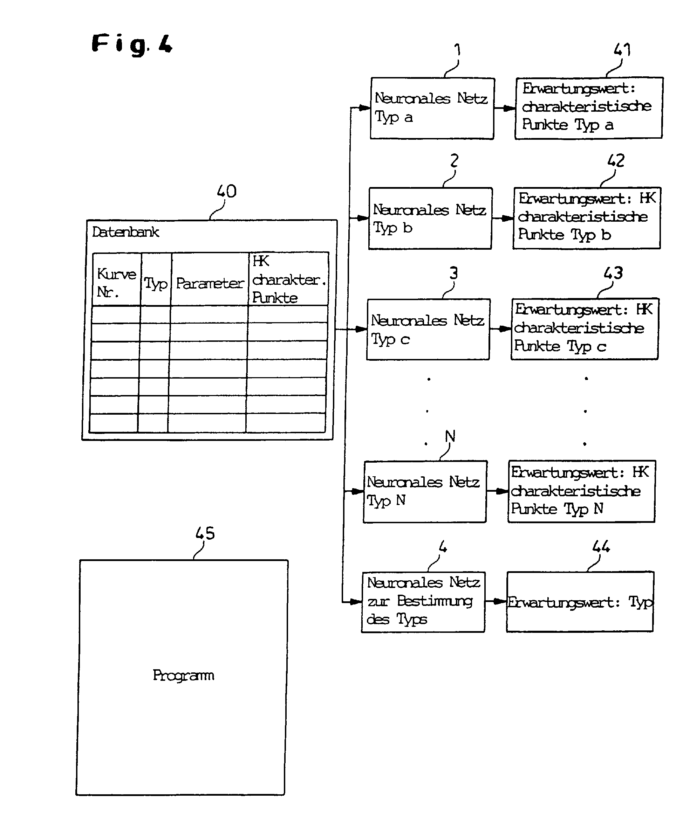

Fig. 4 zeigt ein Blockdiagramm eines Computersystems zur Trainierung der neuronalen Netze. Das Computersystem hat eine Datenbank 40, die für jede gemessene Spannungs-Dehnungs-Kurve einen Datensatz beinhaltet. Der Datensatz für eine Spannungs-Dehnungs-Kurve beinhaltet den Typ der Kurve (beispielsweise Typ a, b oder c - vgl. Fig. 1) und/oder die entsprechenden Hauptkomponenten sowie die Hauptkomponenten (HK) der transformierten charakteristischen Punkte. Ferner beinhaltet der Datensatz für jede Kurve die variierten Parameter.

Von besonderem Vorteil ist, dass in der Datenbank nur die charakteristischen Punkte abzuspeichern sind und nicht sämtliche bei der Aufnahme einer Spannungs-Dehnungs-Kurve ermittelten Messwerte. Dadurch ist z.B. eine Datenreduktion von ca. 60.000 Messwerten auf unter 30 charakteristische Punkte möglich.

Die Datenbank ist mit den neuronalen Netzen 1 bis N verbunden. Ferner ist die Datenbank 40 mit dem neuronalen Netz 4 zur Bestimmung des Kurventyps verbunden. Jedes der neuronalen Netze 1 bis N bzw. 4 hat einen entsprechenden Ausgang 41 bis 43 bzw. 44.

Ferner weist das Computersystem ein Programm 45 zum Auslesen bestimmter Daten aus den in der Datenbank gespeicherten Datensätze und zum Trainieren der neuronalen Netze 1 bis N bzw. 4 auf.

Zum Trainieren der neuronalen Netze liest das Programm 45 zunächst die Parameter des Datensatzes der ersten Kurve der Datenbank 40 aus. Die ausgelesenen Parameter werden dann an die Eingänge der neuronalen Netze 1 bis N sowie des neuronalen Netzes 4 angelegt.

Ferner liest das Programm 45 den Kurventyp der aktuellen Kurve aus der Datenbank 40 aus. Entsprechend des Kurventyps wird dann der Ausgang des entsprechenden neuronalen Netzes gelesen. Ist die erste Kurve beispielsweise vom Typ c so, wird die Ausgabe 43 gelesen.

Die in der Ausgabe 43 gespeicherten Werte werden mit den tatsächlichen Hauptkomponenten der charakteristischen Punkte verglichen. Aus dem Unterschied der berechneten und der tatsächlichen Hauptkomponenten der charakteristischen Punkte wird die Gewichtung des neuronalen Netzes für den Kurventyp c entsprechend angepasst.

Gleichzeitig wird auch das neuronale Netz 4 trainiert, indem der Erwartungswert bzw. dessen HK aus der Ausgabe 44 ausgelesen wird. Die von dem neuronalem Netz 4 ermittelten Wahrscheinlichkeiten für das Vorliegen eines bestimmten Kurventyps werden mit dem tatsächlichen Kurventyp bzw. der entsprechenden HK, wie er in der Datenbank 40 für die betrachtete Kurve gespeichert ist - in dem betrachteten Beispiel der Kurventyp c - verglichen. Aus der Abweichung der ermittelten Wahrscheinlichkeiten mit dem tatsächlich vorliegenden Kurventyp wird das neuronale Netz hier entsprechend angepasst.

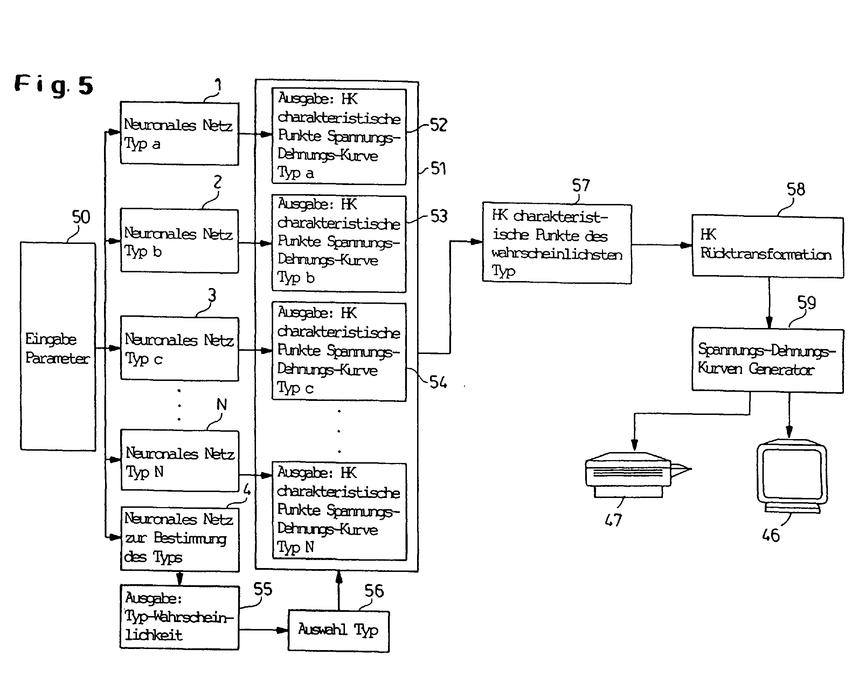

Die Fig. 5 zeigt das resultierende neuronale Netz zur Bestimmung einer Spannungs-Dehnungs-Kurve. Das System hat einen Eingang 50 zur Eingabe der Parameter. Der Eingang 50 ist mit den Eingängen der neuronalen Netze 1 bis N sowie mit dem Eingang des neuronalen Netzes 4 verbunden. Das System hat ferner einen Ausgang 51 mit den Speicher 52, 53, 54 .... jeweils für die neuronalen Netze 1 bis N. Die Speicher 52, 53, 54 .... sind jeweils mit einem Ausgang des entsprechenden neuronalen Netzes 1, 2, 3.... verbunden.

Das neuronale Netz 4 hat einen Ausgang 55 zur Ausgabe der Typwahrscheinlichkeiten bzw. von deren HK. In dem Programmmodul 56 erfolgt die Auswahl des Kurventyps basierend auf der Typwahrscheinlichkeit ggf. nach einer entsprechenden Rücktransformation. Das Programmmodul 56 wählt einen entsprechenden Speicher, der in dem Ausgang 51 beinhalteten Speicher 52, 53, 54....aus. Der Inhalt dieses Speichers wird von dem Programmmodul 57 aus dem entsprechenden Speicher ausgelesen und in dem Programmmodul 58 einer Rücktransformation der Hauptkomponenten unterzogen.

Aufgrund der rücktransformierten Hauptkomponenten wird sodann in dem Spannungs-Dehnungs-Kurven-Generator 59 eine Spannungs-Dehnungs-Kurve generiert.

Die so generierte Spannungs-Dehnungs-Kurve kann beispielsweise auf einem Bildschirm 46 angezeigt oder auf einem Drucker 47 ausgedruckt werden.

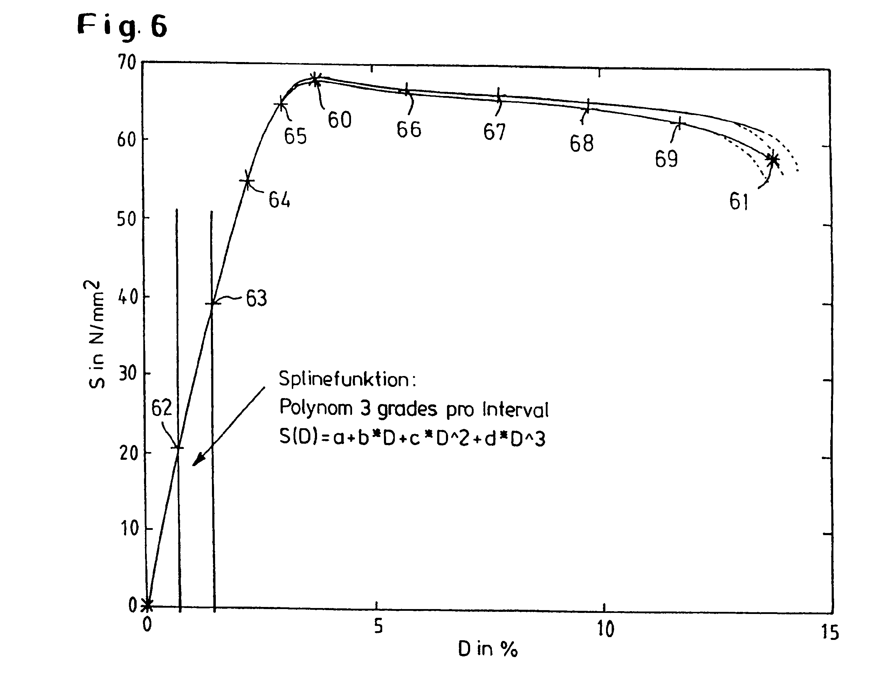

Die Fig. 6 zeigt die Auswahl von charakteristischen Punkten durch einen Benutzer. Bei dem Kurventyp der Fig. 6 erfolgt beispielsweise die Auswahl der charakteristischen Punkte 60 und 61 durch den Benutzer. Die Zwischenpunkte 62 bis 68 werden sodann automatisch äquidistant gesetzt und als weitere charakteristische Punkte automatisch ausgewählt.

Die so ausgewählten charakteristischen Punkte 60 bis 68 werden in den Generator 59 eingespeist und das Ergebnis der Spannungs-Dehnungs-Kurven-Berechnung durch den Generator 59 wird dem Benutzer zur Kontrolle in derselben Darstellung angezeigt. Der Benutzer hat die Möglichkeit sowohl die manuell gesetzten charakteristischen Punkte (beliebig) als auch die automatisch gesetzten Zwischenpunkte (nur vertikal) zu verschieben, um die durch den Generator 59 ermittelte Kurve zu optimieren. Bei der durch den Generator 59 berechneten Kurve wird dabei ein Splinepolynom dritten Grades pro Teilintervall verwendet, wobei zur Approximierung die jeweiligen charakteristischen Punkte verwendet werden.

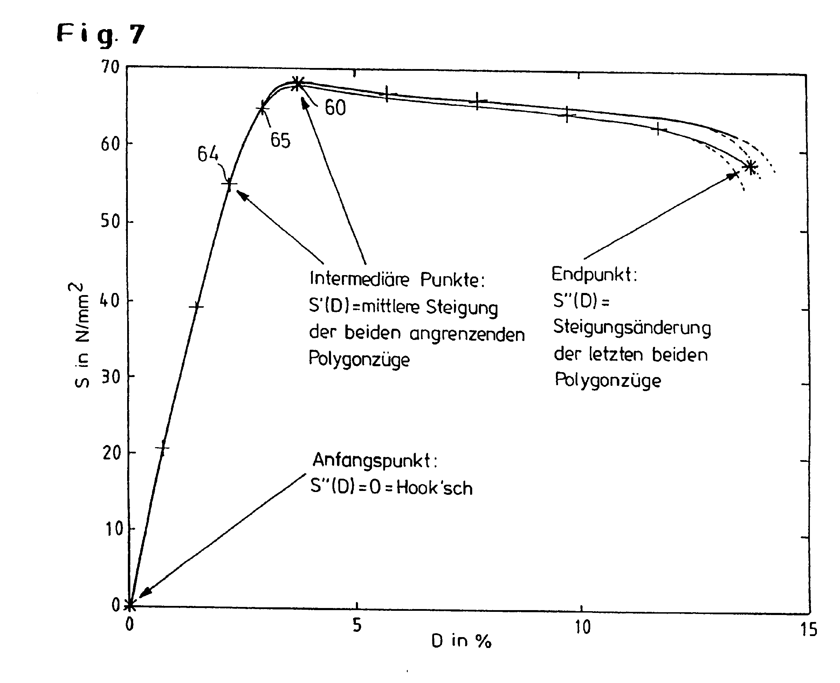

Die Fig. 7 zeigt weitere Randbedingungen für die Generierung einer Spannungs-Dehnungs-Kurve aus den ausgewählten charakteristischen Punkten. Der Anfang der durch den Generator 59 berechneten Spannungs-Dehnungs-Kurve liegt im Ursprung. Die zweite Ableitung der berechneten Kurve S ist in dem Ursprung gleich 0 - was den sogenannten Hook'schen Bereich entspricht.

Für alle intermediären Punkte 62 bis 69 (in Fig. 6), die auf der berechneten Kurve liegen, wird bei der Ermittlung der Splinepolynome die mittlere Steigung der angrenzenden Polygonzüge berücksichtigt. Für die Berechnung am Endpunkt 61 (in Fig. 6) der Spannungs-Dehnungs-Kurve wird hingegen die Steigungsänderung der letzten beiden Polygonzüge zugrunde gelegt.

Ferner ist es vorteilhaft die Spannungs-Dehnungs-Kurve als Kurve mit einer künstlichen "Zeit" zu parameterisieren, um ein Überschwingen zu verhindern. Des weiteren kann der Generator 59 eine Sortierfunktion beinhalten. Physikalisch kann die Dehnung des Probekörpers bei steigender Spannung nur größer werden. Bei einem dieser physikalischen Gegebenheit widersprechenden berechneten Kurvenverlauf kann der Kurvenverlauf durch eine Sortierung der Dehnungswerte korrigiert werden.

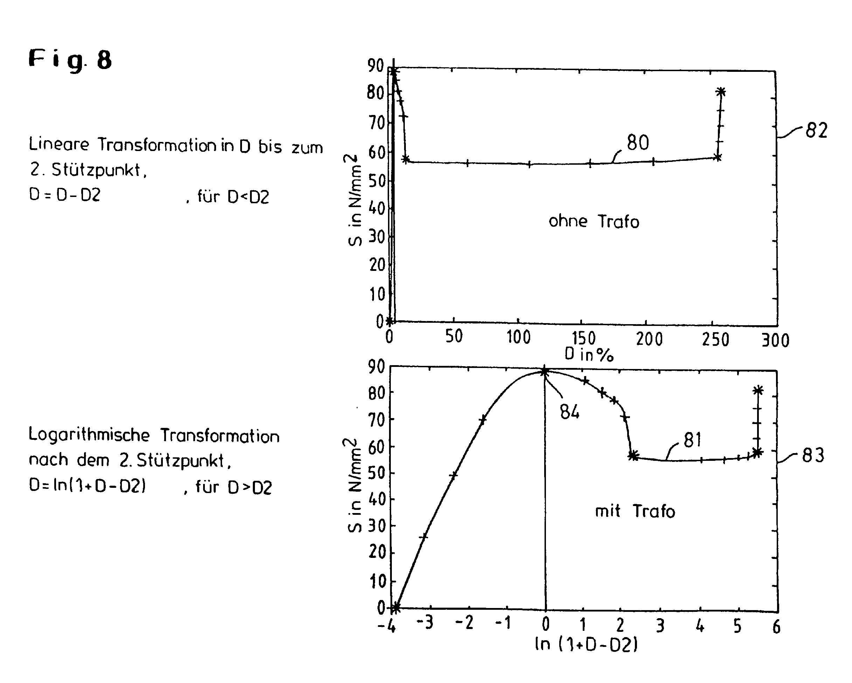

Die Fig. 8 zeigt die Spannungs-Dehnungs-Kurven 80 und 81. Die Spannungs-Dehnungs-Kurve 80 hat in ihrem Anfangsbereich einen sehr steilen Verlauf. Der lineare Anfangsbereich ist aber für die Praxis besonders relevant, es empfiehlt sich daher diesen durch eine geeignete Transformation aufzuweiten:

Die Spannungs-Dehnungs-Kurve 81 geht aus der Spannungs-Dehnungs-Kurve 80 hervor, indem der Kurvenbereich nach dem charakteristischen Punkt 84 eine logarithmische Skalierung der Dehnung D zur Anwendung kommt. Dadurch wird das Krümmungsverhalten der transformierten Kurve vergleichmäßigt und das Splineinterpolationsverfahren stabilisiert.

### Bezugszeichenliste

- neuronales Netz: 1
- neuronales Netz: 2
- neuronales Netz: 3
- neuronales Netz: 4
- neuronales Netz: N
- Ausgabe: 5
- Streckpunkt: 30
- Reißpunkt: 31
- Punkt: 32
- Datenbank: 40
- Ausgabe: 41
- Ausgabe: 42
- Ausgabe: 43
- Ausgabe: 44
- Programm: 45
- Bildschirm: 46
- Drucker: 47
- Eingang: 50
- Ausgang: 51
- Speicher: 52
- Speicher: 53
- Speicher: 54
- Ausgang: 55
- Programmmodul: 56
- Programmmodul: 57
- Programmmodul: 58
- Generator: 59
- charakteristischer Punkt: 60
- charakteristischer Punkt: 61
- Zwischenpunkt: 62
- Zwischenpunkt: 63
- Zwischenpunkt: 64
- Zwischenpunkt: 65
- Zwischenpunkt: 66
- Zwischenpunkt: 67
- Zwischenpunkt: 68
- Zwischenpunkt: 69
- Spannungs- Dehnungs-Kurve: 80
- Spannungs- Dehnungs-Kurve: 81
- Diagramm: 82
- Diagramm: 83
- charakteristischer Punkt: 84

## Patentansprüche

1. Verfahren zur Ermittlung einer Spannungs-Dehnungs-Kurve mit folgenden Schritten:
a) Erstellung eines neuronalen Netzes durch
i) Messung einer Anzahl von Spannungs-Dehnungs-Kurven von Prüfkörpern bei Variationen von Parametern
ii) Auswahl von charakteristischen Punkten für jede der Spannungs-Dehnungs-Kurven und
iii) wobei die Spannungs-Dehnungs-Kurven typisiert werden und für jeden Spannungs-Dehnungs-Kurven-Typen ein gesondertes typspezifisches neuronales Netz trainiert wird
und wobei ein weiteres neuronales Netz zur Bestimmung des Kurventyps mit den Parametern als Eingangsgröße und den Wahrscheinlichkeiten für das Vorliegen eines bestimmten Spannungs-Dehnungs-Kurven-Typen als Ausgangsgröße trainiert wird, und
iv) Parallelschaltung der typspezifischen neuronalen Netze und des neuronalen Netzes zur Bestimmung des Kurventyps
v) Generierung einer Funktion zur Auswahl eines der typspezifischen neuronalen Netze basierend auf dem Ausgang des neuronalen Netzes zur Bestimmung des Kurventyps, wobei die Funktion das Maximum aus den verschiedenen Typwahrscheinlichkeiten ermittelt und dasjenige typspezifische neuronale Netz auswählt, welches dem wahrscheinlichsten Kurventyp entspricht;
b) Bestimmung einer Spannungs-Dehnungs-Kurve mit den Schritten:
- Eingabe der Parameter in das erstellte neuronale Netz,
- Ausgabe der charakteristischen Punkte aus dem erstellten neuronalen Netz,
- Generierung der Spannungs-Dehnungs-Kurve aus den charakteristischen Punkten,
wobei es sich bei den Parametern um die Materialzusammensetzung und die Bauteilgeometrie handelt.

2. Verfahren nach Anspruch 1, **dadurch gekennzeichnet, dass** es sich bei den Parametern um die Materialzusammensetzung, die Farbe, die Bauteilgeometrie, die Verarbeitungsbedingungen oder die Prüfbedingungen betreffende Parameter handelt.

3. Verfahren nach Anspruch 1 oder 2, **dadurch gekennzeichnet, dass** für die Erstellung des neuronalen Netzes zumindest die folgenden Werte einer Spannungs-Dehnungs-Kurve für die Auswahl der charakteristischen Punkte zu Grunde gelegt werden:
a) der Streckpunkt,
b) der Reißpunkt,
c) ein oder mehrere zwischen dem Streckpunkt und dem Reisspunkt liegende Minima und/oder Punkte mit maximaler Krümmung der Spannungs- Dehnungs-Kurve, und vorzugsweise
d) einer oder mehrere Zwischenpunkte, die automatisch generiert werden.

4. Verfahren nach einem der Ansprüche 1 bis 3, **dadurch gekennzeichnet, dass** für die Erstellung des neuronalen Netzes Spannungs-Dehnungs-Kurven ohne Variation zumindest eines Parameters mehrfach ermittelt werden, um aus den Spannungs-Dehnungs-Kurven die charakteristischen Punkte auszuwählen.

5. Verfahren nach einem der vorhergehenden Ansprüche, **dadurch gekennzeichnet, dass** für die Erstellung des neuronalen Netzes die charakteristischen Punkte einer Transformation, vorzugsweise einer Faktorenanalyse oder Hauptkomponententransformation, unterzogen werden und das Trainieren des neuronalen Netzes mit den transformierten charakteristischen Punkten als Ausgangsgrössen erfolgt.

6. Verfahren nach Anspruch 5, **dadurch gekennzeichnet, dass** vor der Ausgabe der charakteristischen Punkte eine Rücktransformation erfolgt.

7. Verfahren nach einem der vorhergehenden Ansprüche, **dadurch gekennzeichnet, dass** eine logarithmische Skalierung der Dehnung in einem hinteren Teilintervall vorzugsweise nach dem ersten charakteristischen Punkt erfolgt.

8. Verfahren nach einem der vorhergehenden Ansprüche, wobei zur Berechnung der Spannungs-Dehnungskurve eine stückweise Approximation in Teilintervallen durchgeführt wird, vorzugsweise eine stückweise Approximation mittels Splinepolynomen dritten Grades.

## Claims

1. Method of determining a stress-strain curve, comprising the following steps:
a) creation of a neural network by
i) measuring a number of stress-strain curves of test bodies with variations of parameters,
ii) selecting characteristic points for each of the stress-strain curves, and
iii) wherein the stress-strain curves are typed and for each stress-strain curve type a separate type-specific neural network is trained
and wherein a further neural network for determining the curve type is trained with the parameters as input variable and the probabilities for the presence of a specific stress-strain curve type as output variable, and
iv) connecting in parallel the type-specific neural networks and the neural network for determining the curve type,
v) generating a function to select one of the type-specific neural networks based on the output of the neural network for determining the curve type, wherein the function determines the maximum from the different type probabilities and selects the type-specific neural network which corresponds to the most probable curve type;
b) determination of a stress-strain curve, comprising the steps:
- input of the parameters into the neural network created,
- output of the characteristic points from the neural network created,
- generation of the stress-strain curve from the characteristic points,
the parameters being the composition of the material and the geometry of the component.

2. Method according to claim 1, **characterised in that** the parameters are the composition of the material, the colour, the geometry of the component, the processing conditions or parameters relating to the test conditions.

3. Method according to claim 1 or 2, **characterised in that** for the creation of the neural network the selection of the characteristic points is based on at least the following values of a stress-strain curve:
a) the yield point,
b) the tearing point,
c) one or more minima and/or points of maximum curvature of the stress-strain curve located between the yield point and the tearing point, and preferably
d) one or more intermediate points which are generated automatically.

4. Method according to any one of claims 1 to 3, **characterised in that** for the creation of the neural network stress-strain curves are determined a number of times without variation of at least one parameter in order to select the characteristic points from the stress-strain curves.

5. Method according to any one of the preceding claims, **characterised in that** for the creation of the neural network the characteristic points are subjected to transformation, preferably factor analysis or principal component transformation, and the training of the neural network is effected with the transformed characteristic points as output variables.

6. Method according to claim 5, **characterised in that** back-transformation is carried out before the characteristic points are output.

7. Method according to any one of the preceding claims, **characterised in that** logarithmic scaling of the strain is effected in a posterior sub-interval, preferably after the first characteristic point.

8. Method according to any one of the preceding claims, wherein to calculate the stress-strain curve, piecewise approximation in sub-intervals is carried out, preferably piecewise approximation by means of third-degree spline polynomals.

## Revendications

1. Procédé pour déterminer une courbe de tension-allongement comprenant les étapes suivantes :
a) élaboration d'un réseau neuronal par
i) mesure d'un certain nombre de courbes de tension-allongement d'éprouvettes en cas de variations de paramètres
ii) sélection de points caractéristiques pour chacune des courbes de tension-allongement et
iii) les courbes de tension-allongement étant classées par type et un réseau neuronal, spécifique par type et séparé, faisant l'objet d'un entraînement pour chaque type de courbe de tension-allongement et un autre réseau neuronal destiné à la détermination du type de courbe avec les paramètres comme grandeur d'entrée et les probabilités pour la présence d'un certain type de courbe de tension-allongement comme grandeur de sortie faisant l'objet d'un entraînement, et
iv) branchement parallèle des réseaux neuronaux spécifiques par type et du réseau neuronal pour la détermination du type de courbe
v) génération d'une fonction pour la sélection de l'un des réseaux neuronaux spécifiques par type sur la base de la sortie du réseau neuronal pour la détermination du type de courbe, la fonction déterminant le maximum à partir des différentes probabilités de type et sélectionnant le réseau neuronal spécifique par type qui correspond au type de courbe le plus probable ;
b) détermination d'une courbe de tension-allongement comprenant les étapes suivantes :
- entrée des paramètres dans le réseau neuronal établi,
- sortie des points caractéristiques provenant du réseau neuronal élaboré,
- génération de la courbe de tension-allongement à partir des points caractéristiques,
sachant que, en ce qui concerne les paramètres, il s'agit de la composition de matériau et de la géométrie de composant.

2. Procédé selon la revendication 1, **caractérisé en ce que**, en ce qui concerne les paramètres, il s'agit des paramètres concernant la composition de matériau, de la couleur, de la géométrie de composant, des conditions de traitement ou des conditions d'essai.

3. Procédé selon la revendication 1 ou la revendication 2, **caractérisé en ce que**, pour l'élaboration du réseau neuronal, au moins les valeurs suivantes d'une courbe de tension-allongement sont prises pour base de la sélection des points caractéristiques :
a) le point d'extension,
b) le point d'arrachement,
c) un ou plusieurs minima situés entre le point d'extension et le point d'arrachement et/ou des points avec la courbure maximale de la courbe de tension-allongement, et de préférence
d) un ou plusieurs points intermédiaires, qui sont générés automatiquement.

4. Procédé selon l'une quelconque des revendications 1 à 3, **caractérisé en ce que**, pour l'élaboration du réseau neuronal, des courbes de tension-allongement sans variation d'au moins un paramètre sont déterminées à plusieurs reprises, afin de sélectionner les points caractéristiques à partir des courbes de tension-allongement.

5. Procédé selon l'une quelconque des revendications précédentes, **caractérisé en ce que**, pour l'élaboration du réseau neuronal, les points caractéristiques sont soumis à une transformation, de préférence une analyse de facteurs ou une transformation de composants principaux, et l'entraînement du réseau neuronal s'effectue avec les points caractéristiques transformés comme grandeurs de départ.

6. Procédé selon la revendication 5, **caractérisé en ce qu'**une transformation inverse intervient avant la sortie des points caractéristiques.

7. Procédé selon l'une quelconque des revendications précédentes, **caractérisé en ce qu'**une graduation logarithmique de l'allongement intervient dans un intervalle partiel arrière, de préférence après le premier point caractéristique.

8. Procédé selon l'une quelconque des revendications précédentes, une approximation par morceaux étant effectuée à des intervalles partiels pour le calcul de la courbe de tension-allongement, de préférence une approximation par morceaux au moyen de polynômes spline du troisième degré.
